# EUROPEAN PATENT SPECIFICATION

(11) **EP 2 916 501 B1**
(45) Date of publication and mention of the grant of the patent: **20.09.2017**
(21) Application number: 13850342.0
(22) Date of filing: 09.07.2013
(51) Int. Cl.: H04L 12/851, H04L 12/877, H04W 72/04, H04W 28/22

(54) **CONTROL APPARATUS, COMMUNICATION SYSTEM, COMMUNICATION CONTROL METHOD, AND NONTEMPORARY COMPUTER-READABLE MEDIUM ON WHICH PROGRAM HAS BEEN STORED**
STEUERUNGSVORRICHTUNG, KOMMUNIKATIONSSYSTEM, KOMMUNIKATIONSSTEUERUNGSVERFAHREN UND NICHTTEMPORÄRES COMPUTERLESBARES MEDIUM MIT DARAUF GESPEICHERTEM PROGRAMM
APPAREIL DE COMMANDE, SYSTÈME DE COMMUNICATION, PROCÉDÉ DE COMMANDE DE COMMUNICATION ET SUPPORT LISIBLE PAR UN ORDINATEUR NON TEMPORAIRE SUR LEQUEL UN PROGRAMME A ÉTÉ MÉMORISÉ

(30) Priority: 30.10.2012 JP 2012238584
(43) Date of publication of application: 09.09.2015
(73) Proprietor: NEC Corporation, Tokyo 108-8001 (JP)
(72) Inventor: NISHIOKA, Jun, Tokyo 108-8001 (JP)
(74) Representative: Robson, Aidan John
(86) International application number: PCT/JP2013/004223
(87) International publication number: WO 2014/068812

(56) References cited:
- WO-A1-2010/022791
- WO-A1-2011/070940
- JP-A- 2011 525 065
- US-A1- 2011 141 897
- US-B1- 6 865 393

## Description

### Technical Field

The present invention relates to a control device, a communication system, a communication control method, and a non-transitory computer readable medium storing a program.

### Background Art

As the information technology progresses in recent years, a demand for data communication traffic is increasing. Under this circumstance, broadband communication in a network and reduction in operation cost have been required.

In wireless systems utilizing a frequency of a millimeter wave band or the like, broadband transmission can be performed. A network constituted of radio links such as an FWA (Fixed broadband Wireless Access) employing these wireless systems is utilized in a mobile phone network or the like.

Communication quality of a radio link varies depending on an SNR (Signal to Noise Ratio) of a receiving signal. In order to implement further broadband communication using a radio link, an adaptive modulation technique has been paid attention to. The adaptive modulation technique is a technique, in which a modulation method having a highest transmission efficiency is adaptively obtained from a radio condition of a radio link for using the modulation method. Use of the adaptive modulation technique makes it possible to perform optimum wireless communication depending on the radio environment. Enhancement of frequency efficiency can be expected by performing optimum wireless communication depending on the radio environment.

### Citation List

### Patent Literature

PTL 1: Japanese Laid-open Patent Publication No. 2012-65135

### Summary of Invention

### Technical Problem

In a radio link having an adaptive modulation function, the transmission rate changes by an external factor such as the weather. When band control is not performed when the transmission rate is lowered in a radio link, a band that is consumed by a piece of traffic lost in the radio link, which turns out to be a bottle neck, may be wasted.

PTL 1 discloses a transport control system, in which the amount of traffic flowing through a network is monitored, and a difference in traffic amount between the start node and the end node is measured to find a piece of traffic wasted in the network. This technique, however, requires constant monitoring of the traffic amount, and takes time to specify the radio link, which turns out to be a bottle neck.

In other words, in the aforementioned technique, when the transmission rate of a radio link changes, it is not possible to efficiently perform band control. Another example of the prior art can be found in WO2010/022791.

In view of the above-described circumstances, the present invention has been made, and a main object of the invention is to provide a control device, a communication system, a communication control method, and a non-transitory computer-readable medium storing a program, which enable to efficiently perform band control when the transmission rate of a radio link changes.

### Solution to Problem

A control device according to an aspect of the present invention is a control device for controlling a band of each piece of traffic between communication devices having an adaptive modulation function, including:
a throughput calculation means which receives information relating to a transmission rate change, and calculates a predicted end-to-end throughput of each piece of traffic, on the basis of the information and a table which includes a degree of priority and a band index of each piece of traffic;
an adjustment means which calculates a missing band of each piece of traffic and/or an unused band of a radio link connecting between the communication devices, when band setting is performed on the basis of the predicted throughput, and decides band distribution with respect to each piece of traffic, on the basis of the table and the missing band and/or the unused band; and
a setting transmission means which transmits the band distribution decided by the adjustment means to the communication devices.

A communication system according to another aspect of the present invention includes a plurality of communication devices having an adaptive modulation function, and a control device which controls a band of each piece of traffic between the plurality of communication devices, wherein
each of the plurality of communication devices executes the adaptive modulation function, and transmits a transmission rate change to the control device, and
the control device includes:
a throughput calculation means which receives information relating to a transmission rate change, and calculates a predicted end-to-end throughput of each piece of traffic, on the basis of the information and a table which includes a degree of priority and a band index of each piece of traffic;
an adjustment means which calculates a missing band of each piece of traffic and/or an unused band of a radio link connecting between the communication devices, when band setting is performed on the basis of the predicted throughput, and decides band distribution with respect to each piece of traffic, on the basis of the table and the missing band and/or the unused band; and
a setting transmission means which transmits the band distribution decided by the adjustment unit to the plurality of communication devices.

A communication control method according to yet another aspect of the present invention is a communication control method for setting a band of each piece of traffic between communication devices having an adaptive modulation function, including:
receiving information relating to a transmission rate change, and calculating a predicted end-to-end throughput of each piece of traffic, on the basis of the information and a table which includes a degree of priority and a band index of each piece of traffic; and
calculating a missing band of each piece of traffic and/or an unused band of a radio link connecting between the communication devices, when band setting is performed on the basis of the predicted throughput, and deciding band distribution with respect to each piece of traffic, on the basis of the table and the missing band and/or the unused band.

A non-transitory computer-readable medium storing a program according to still another aspect of the present invention is a non-transitory computer-readable medium storing a program which causes a computer to calculate a band of each piece of traffic between communication devices having an adaptive modulation function, the program causing the computer to execute:
a throughput calculating step of receiving information relating to a transmission rate change, and calculating a predicted end-to-end throughput of each piece of traffic, on the basis of the information and a table which includes a degree of priority and a band index of each piece of traffic; and
an adjusting step of calculating a missing band of each piece of traffic and/or an unused band of a radio link connecting between the communication devices, when band setting is performed on the basis of the predicted throughput, and deciding band distribution with respect to each piece of traffic, on the basis of the table and the missing band and/or the unused band.

### Advantageous Effects of Invention

According to the invention, it is possible to provide a control device, a communication system, a communication control method, and a non-transitory computer-readable medium storing a program, which enable to efficiently control band control when the transmission rate of a radio link changes.

### Brief Description of Drawings

Fig. 1 is a block diagram illustrating a configuration of a wireless system in a first exemplary embodiment;
Fig. 2 is a diagram illustrating a relationship between a modulation method of a radio link and a transmission rate in the first exemplary embodiment;
Fig. 3 is a diagram illustrating an example of traffic to be handled in the wireless system in the first exemplary embodiment;
Fig. 4 is a block diagram illustrating a configuration of a path control device 101 in the first exemplary embodiment;
Fig. 5 is a flowchart illustrating a flow of a process to be carried out by the path control device 101 in the first exemplary embodiment;
Fig. 6A is a conceptual diagram illustrating a communication state in the first exemplary embodiment;
Fig. 6B is a diagram illustrating a band of each piece of traffic in the first exemplary embodiment;
Fig. 7A is a conceptual diagram illustrating a communication state in the first exemplary embodiment;
Fig. 7B is a diagram illustrating a band of each piece of traffic in the first exemplary embodiment;
Fig. 8A is a conceptual diagram illustrating a communication state in the first exemplary embodiment; and
Fig. 8B is a diagram illustrating a band of each piece of traffic in the first exemplary embodiment.

### Description of Embodiments

### <First Exemplary Embodiment>

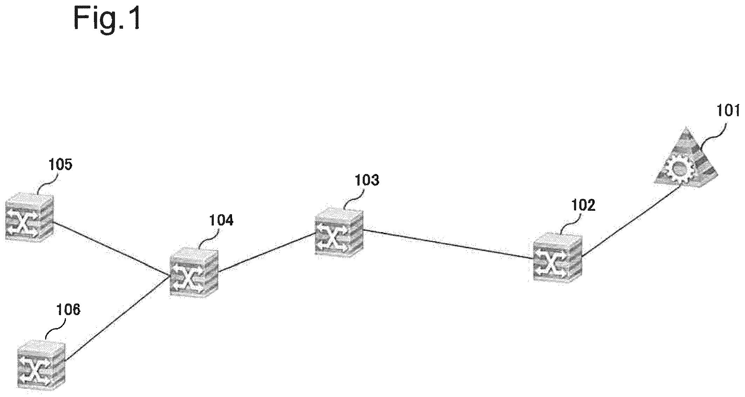

Hereinafter, an exemplary embodiment of the present invention is described referring to the drawings. First of all, a wireless system in the exemplary embodiment is described referring to Fig. 1.

As illustrated in the drawings, the wireless system in the exemplary embodiment includes a path control device 101, and communication devices 102 to 106. The number of the devices is merely an example. Actually, the number of the devices may be any number. The devices are connected to each other by a radio link.

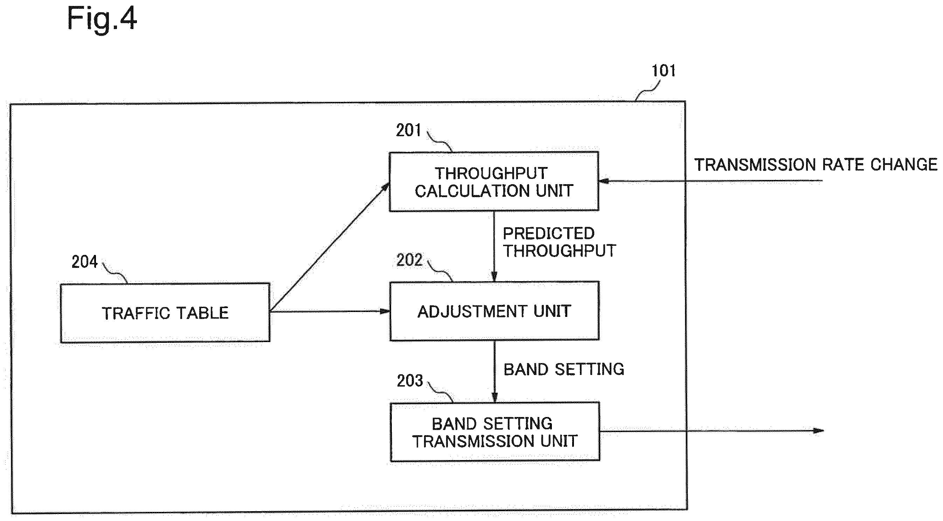

The path control device 101 receives a notice indicating a transmission rate change from each of the communication devices. The path control device 101 calculates setting of band control with respect to each piece of traffic in accordance with the received transmission rate change, and notifies the calculation result to each of the communication devices. The details and the operation to be performed by the path control device 101 will be described later referring to Fig. 4 and the relevant drawings.

The communication devices 102 to 106 have an existing adaptive modulation function, and notify the path control device 101, when the transmission rate of a radio link changes. Further, the communication devices 102 to 106 receive setting of band control with respect to each piece of traffic from the path control device 101, and perform band control based on the setting.

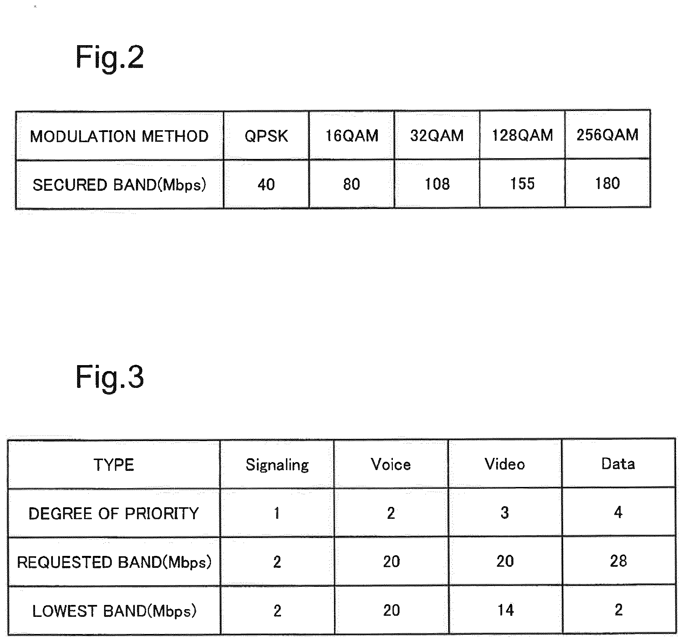

A relationship between a modulation method of a radio link and a transmission rate in the wireless system is illustrated in Fig. 2. For instance, when the modulation method is a QPSK (Quadrature Phase Shift Keying), a band of 40 Mbps is secured. Likewise, when the modulation method is a 16 QAM (Quadrature Amplitude Modulation), a band of 80 Mbps is secured. The communication devices 102 to 106 execute an adaptive modulation function to change the modulation method (in other words, the transmission rate) depending on the weather or the like.

Next, an example of traffic to be handled by the wireless system illustrated in Fig. 1 is illustrated in Fig. 3. In the exemplary embodiment, four types of traffic (Signaling, Voice, Video, and Data) are used. Each piece of the traffic has a degree of priority, a requested band, and a lowest band. For instance, in the case of Voice type traffic, the degree of priority is 2 (second highest to Signaling), and the requested band and the lowest band are respectively 20 Mbps. The path control device 101 manages the traffic table (see Fig. 3) in a memory provided therein.

Next, an exemplified configuration of the path control device 101 is described referring to Fig. 4. Fig. 4 is a block diagram illustrating a configuration of the path control device 101. The path control device 101 is provided with a throughput calculation unit 201, an adjustment unit 202, a band setting transmission unit 203, and a traffic table 204.

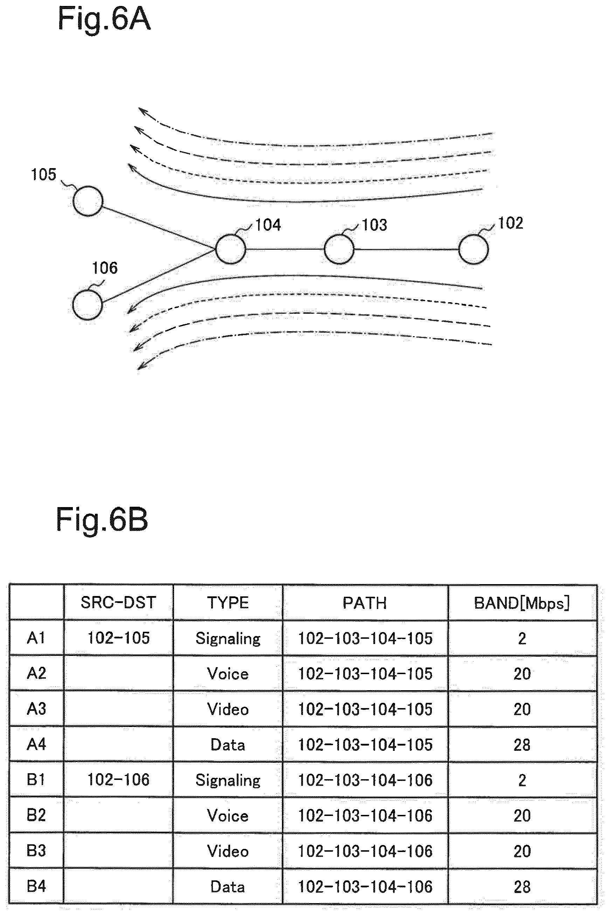

The throughput calculation unit 201 receives a transmission rate change of a radio link from each of the communication devices. The throughput calculation unit 201 calculates a predicted end-to-end throughput of traffic which may be affected by the transmission rate change. The throughput calculation unit 201 calculates a predicted throughput by sequentially allocating a band to the pieces of traffic from a piece of traffic whose degree of priority is highest in the descending order of the degree of priority, referring to the traffic table 204 described above (see Fig. 3). An exemplified method for calculating a predicted throughput is described referring to Fig. 6A to Fig. 8B.

The traffic table 204 stores therein a degree of priority and a band index (in the example of Fig. 3, a requested band and a lowest band) of each piece of traffic. The path control device 101 may not need to internally include the traffic table 204. For instance, the traffic table 204 may be stored in a storage device (such as a USB (Universal Serial Bus) memory), which is detachably attachable to the path control device 101.

The throughput calculation unit 201 inputs a calculated predicted throughput of each piece of traffic to the adjustment unit 202. The adjustment unit 202 calculates a traffic amount, assuming that band control is performed on the basis of the input predicted throughput, and determines whether there is an unused band in each of the radio links. Then, the adjustment unit 202 determines whether it is possible to enhance the band by sequentially allocating the unused band to the pieces of traffic from a piece of traffic whose degree of priority is highest in the descending order of the degree of priority.

Further, the adjustment unit 202 determines whether there is a piece of traffic that does not satisfy the lowest band in the predicted throughput. When there is a piece of traffic that does not satisfy the lowest band, the adjustment unit 202 determines whether it is possible to transfer a band from another piece of traffic to the piece of traffic that does not satisfy the lowest band. This allows for the adjustment unit 202 to allocate the unused band and to decide the final band setting after adjustment on transfer of a band.

The band setting transmission unit 203 transmits the band setting decided by the adjustment unit 202 to each of the communication devices.

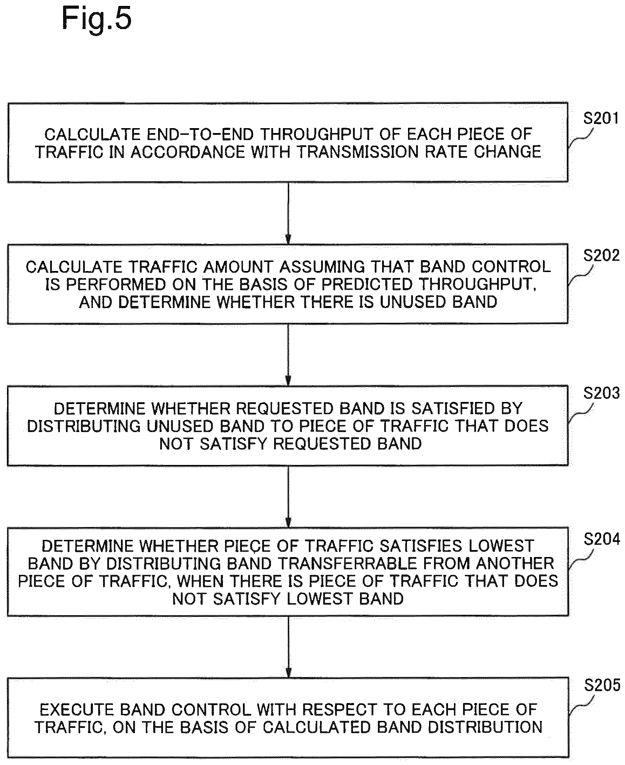

Next, an operation to be performed by the path control device 101 is described in detail referring to Fig. 5. Fig. 5 is a flowchart illustrating a processing to be carried out by the path control device 101.

The throughput calculation unit 201 receives a transmission rate change from each of the communication devices. The throughput calculation unit 201 calculates an end-to-end-throughput (a predicted throughput) of each piece of traffic in accordance with the transmission rate change (Step S201).

The adjustment unit 202 calculates a traffic amount, assuming that band control is performed on the basis of the predicted throughput, and determines whether there is an unused band in each of the radio links (Step S202). When there is an unused band, the adjustment unit 202 determines whether it is possible to enhance the band state by allocating the unused band to a piece of traffic that does not satisfy a requested band (Step S203). When it is determined that the band state is enhanced, the adjustment unit 202 allocates the unused band to the piece of traffic that does not satisfy the requested band.

The adjustment unit 202 determines whether there is a piece of traffic that does not satisfy the lowest band in accordance with a transmission rate change (Step S204). When it is determined that there is a piece of traffic that does not satisfy the lowest band, the adjustment unit 202 determines whether it is possible to satisfy the lowest band by transferring a band of another piece of traffic to the piece of traffic that does not satisfy the lowest band (Step S204). When it is determined that the lowest band is satisfied, the adjustment unit 202 decides the band value of each piece of traffic after the transfer (including a piece of traffic that does not satisfy the lowest band, and a piece of traffic serving as a transfer source) (Step S204). The adjustment unit 202 decides band distribution with respect to each piece of traffic by performing the processing of Steps S202 to S204.

The band setting transmission unit 203 transmits setting of band distribution decided by the adjustment unit 202 to each of the communication devices relating to setting change. Upon receiving a notice on the setting change, the communication device changes setting of a radio link in accordance with the setting contents (Step S205).

Next, an exemplified configuration of band control to be performed by the path control device 101 is described referring to Fig. 6A to Fig. 8B. Fig. 6A is a system conceptual diagram illustrating a communication state for use in the exemplified configuration In the exemplified configuration, four types of traffic paths are set between the communication terminal 102 and the communication terminal 105, and four types of traffic paths are set between the communication terminal 102 and the communication terminal 106.

Fig. 6B illustrates a band of each piece of traffic, when a 256 QAM (180 Mbps) is selected as a modulation method of all the radio links in the communication paths illustrated in Fig. 6A. The path control device 101 allocates the band of 180 Mbps to each piece of traffic, referring to the traffic table 204 (see Fig. 3). When the band of 180 Mbps is allocated, it is possible to allocate the requested band to all the pieces of traffic.

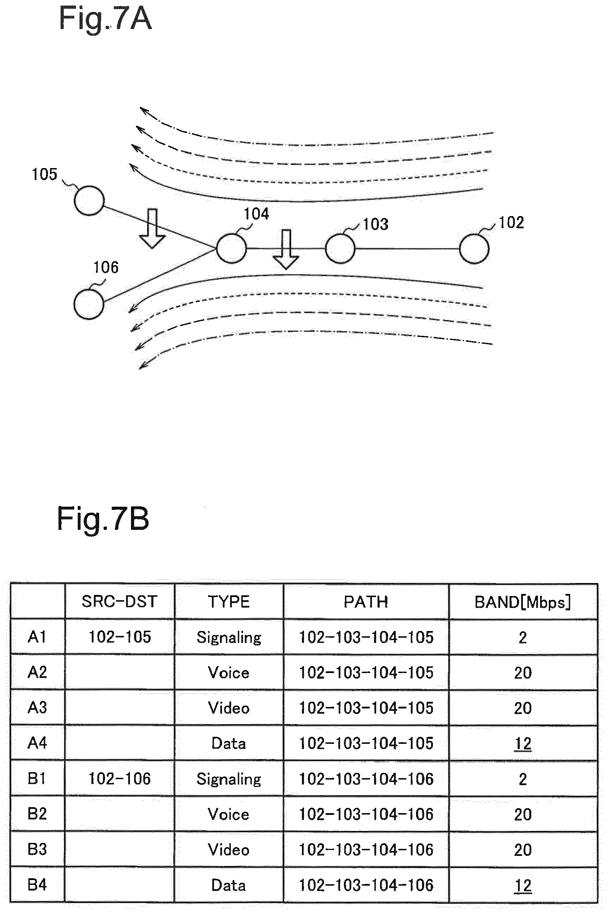

Next, there is described a case, in which a radio link is degraded between the communication device 103 and the communication device 104, and between the communication device 104 and the communication device 105, and the modulation method is changed to a 32 QAM (108 Mbps). Fig. 7A is a system conceptual diagram illustrating a communication state after the link degradation. Fig. 7B is a diagram illustrating band setting of each piece of traffic when the radio links are degraded. The path control device 101 receives a change in the modulation method.

The path control device 101 calculates a throughput of each piece of traffic in accordance with a degree of priority in the traffic table 204 (see Fig. 3) (Step S201). Regarding the pieces of traffic whose degrees of priority are 1 to 3 (Signaling (A1, B1), Voice (A2, B2), Video (A3, B3)), it is possible to satisfy the requested band between the communication control devices 102 to 105, and between the communication control devices 102 to 106. However, the data traffics (A4, B4) between the communication control devices 103 and 104 cannot satisfy the requested band of 28 Mbps, and the data traffics share the band of the remaining 24 Mbps (=108-2×(2+20+20)). Specifically, as illustrated in Fig. 7B, the data traffic between the communication control devices 102 and 105 has a band of 12 Mbps, and the data traffic between the communication control devices 102 and 106 has a band of 12 Mbps (Step S202).

Subsequently, the path control device 101 checks whether it is possible to allocate an unused band generated by band control (Step S202). When the aforementioned band control is performed in accordance with a throughput, an unused band is generated between the radio links 102 to 103. However, there is no degraded piece of traffic capable of using the unused band. Therefore, the path control device 101 does not perform any control in this stage (Step S203).

The path control device 101 determines whether each piece of traffic satisfies the lowest band, and when there is a piece of traffic that does not satisfy the lowest band, the path control device 101 checks whether it is possible to transfer a band from another piece of traffic (Step S204). In this example, since all the pieces of traffic satisfy the lowest band, the path control device 101 does not transfer a band.

The path control device 101 notifies the communication device 102 of the band control of narrowing the bands of A4 and B4 (data traffics) to 12 Mbps (Step S205).

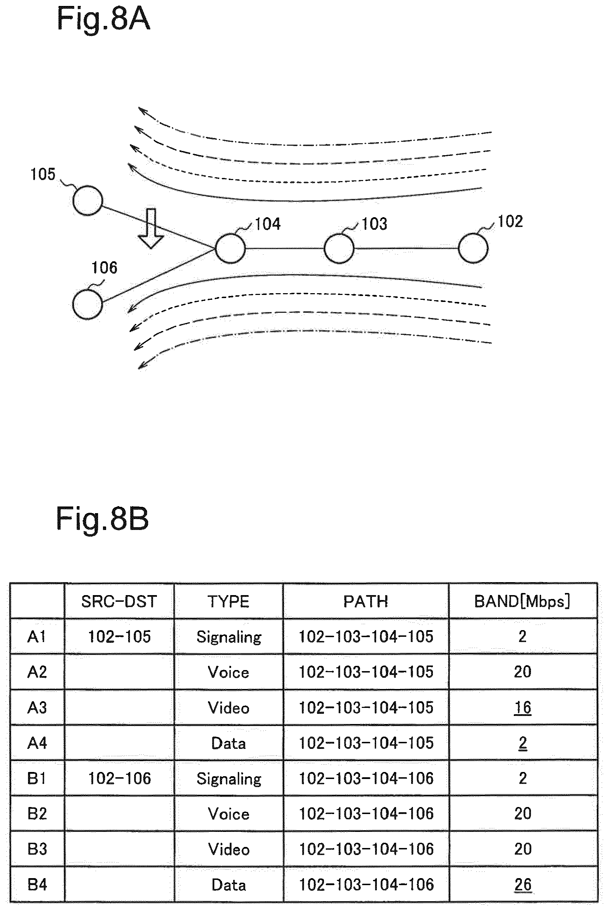

Next, there is described a case, in which a radio link is degraded between the communication device 104 and the communication device 105, and the modulation method is set to a QPSK (40 Mbps). Fig. 8A is a system conceptual diagram illustrating a communication state after the radio link is degraded. Fig. 8B is a diagram illustrating band setting with respect to each piece of traffic when the radio link is degraded. The path control device 101 receives a change in the modulation method. In this case, in the traffics indicated by the reference signs A1 to A4 in Fig. 8B, the radio link between the communication device 104 and the communication device 105 turns out to be a bottle neck on the communication.

The path control device 101 calculates a throughput of each piece of traffic, referring to the traffic table 204 (see Fig. 3), as the transmission rate is lowered. The path control device 101 sequentially allocates 40 Mbps to the pieces of traffic in the descending order of the degree of priority, referring to the traffic table 204 (see Fig. 3). By this control, the throughputs of A1 (Signaling) and A2 (Voice) can maintain the requested band, but the throughput of A3 (Video) is 18 Mbps, which is equal to or lower than the requested band, and the throughput of A4 (Data) is 0 Mbps (Step S201).

The path control device 101 calculates a traffic amount of each radio link, when band control is performed between the communication devices 102 and 105, on the basis of a predicted throughput calculated in Step S201. In this case, the sum of traffic amounts relating to the radio link between the communication devices 103 and 104 is 94 Mbps (=2+20+18+0+2+20+20+12). The path control device 101 determines that there is an unused band of 14 Mbps, because the sum of bands of the radio link between the communication devices 103 and 104 is 108 Mbps (Step S202).

The path control device 101 determines whether it is possible to enhance the throughput by allocating the unused band to each piece of traffic (B1 to B4) between the communication device 102 and the communication device 106. Note that, between the communication device 102 and the communication device 106, the band of the radio link between the communication device 103 and the communication device 104 is 108 Mbps, and the bands of the radio links between the communication devices other than between the communication device 103 and the communication device 104 are 180 Mbps.

The path control device 101 decides to allocate, to B4 (Data), 14 Mbps out of the unused band of the radio link between the communication device 103 and the communication device 104, and of the radio link between the communication device 102 and the communication device 103. This makes it possible to increase the band of B4 (Data) from 12 Mbps to 26 Mbps (Step S203).

There is no traffic requesting a band regarding the other unused band of the radio link between the communication device 102 and the communication device 103. Therefore, the path control device 101 does not perform any control in this stage.

Next, there is described a case, in which the path control device 101 transfers a band to a piece of traffic that does not satisfy the lowest band. In this example, the band of A4 (Data) is 0 Mbps so that A4 (Data) cannot satisfy the lowest band (2 Mbps). In this case, the path control device 101 determines whether there is a transferrable band in the other pieces of traffic between the communication devices 102 and 106 in the ascending order of the degree of priority. In this example, the band (18 Mbps) of A3 (Video) is wider than the lowest band (14 Mbps). In other words, it is possible to transfer 4 Mbps. Therefore, the path control device 101 decides to transfer, to A4 (Data), 2 Mbps out of the band of A3 (Video) (Step S204). The path control device 101 can save the degraded piece of traffic without adversely affecting the piece of traffic whose degree of priority is high by sequentially designating the pieces of traffic that satisfy the lowest band in the ascending order of the degree of priority, as a transfer source, when a band is transferred.

In view of the processing as described above, the path control device 101 performs the respective band settings illustrated in Fig. 8B with respect to the communication device 102 (Step S205).

Next, the advantageous effects of the wireless system in the present exemplary embodiment are described. Unlike link faults, when the transmission rate changes due to an adaptive modulation, there remains a certain amount of band even after the transmission rate is lowered. The path control device 101 performs band adjustment, taking advantage of this property. Specifically, as described above, the path control device 101 calculates a predicted end-to-end throughput of each piece of traffic when the transmission rate changes, and performs band adjustment of each piece of traffic, on the basis of a piece of traffic that does not satisfy the lowest band, or on the basis of an unused band in the calculated predicted throughput. This makes it possible to promptly perform band setting when the transmission rate changes, and to allocate a band appropriate for each piece of traffic to each piece of traffic.

For instance, the path control device 101 allocates, to a piece of traffic that does not satisfy a requested band, an unused band to be obtained when band setting is performed in accordance with a predicted throughput. This allows for the path control device 101 to reduce a band which may be wasted, and to enhance communication quality of each piece of traffic.

Further, the path control device 101 transfers a band to a piece of traffic that does not satisfy the lowest band when band setting is performed in accordance with a predicted throughput, from a piece of traffic whose degree of priority is higher than the degree of priority of the piece of traffic that does not satisfy the lowest band. This allows for the path control device 101 to eliminate a piece of traffic that does not satisfy the lowest band, and to eliminate a piece of traffic which may be unable to communicate. According to this configuration, the path control device 101 can avoid degradation of the quality of a piece of traffic whose degree of priority is high by designating a piece of traffic whose degree of priority is lowest among the pieces of traffic having a transferable band, as a transfer source.

The invention is not limited to the exemplary embodiment described above, but may be modified as necessary, as far as such modifications do not depart from the gist of the invention. For instance, in the foregoing description, the path control device 101 calculates band setting of each piece of traffic. Alternatively, a wireless system may not include a path control device 101, and each communication device may be configured to execute the aforementioned processing (the processing illustrated in Fig. 5). Specifically, a communication device may be provided with a band adjustment function (see Fig. 5), in addition to a general communication function (including an adaptive modulation function).

Preferably, the aforementioned adjustment unit 202 may perform both of the processing, i.e. processing of allocating an unused band and processing of transferring a band. However, even when the adjustment unit 202 performs any one of the processing, it is possible to perform efficient band control, as compared with the conventional art as described above.

The processing of the processing units (the throughput calculation unit 201, the adjustment unit 202, the band setting transmission unit 203) in the path control device 101 may be implemented as a program to be operated in any computer. The program may be stored using various types of non-transitory computer readable medium, and may be supplied to a computer. The non-transitory computer readable medium includes various types of tangible storage medium. Examples of the non-transitory computer readable medium are a magnetic recording medium (e.g. a flexible disk, a magnetic tape, a hard disk drive), a magneto-optical recording medium (e.g. a magneto-optical disk), a CD-ROM (Read Only Memory), a CD-R, a CD-R/W, and a semiconductor memory (e.g. a mask ROM, a PROM (Programmable ROM), an EPROM (Erasable PROM), a flash ROM, and a RAM (Random Access memory)). Further, the program may be supplied to a computer by various types of transitory computer readable medium. Examples of the transitory computer readable medium include an electrical signal, a light signal, and an electromagnetic wave. A transitory computer readable medium is capable of supplying a program to a computer via a wired communication path such as a power line and an optical fiber, or via a wireless communication path.

### Industrial Applicability

The present invention is applicable to a mobile backhaul network in a mobile phone network, for instance.

### Reference Signs List

- 101: Path control device
- 102 to 106: Communication devices
- 201: Throughput calculation unit
- 202: Adjustment unit
- 203: Band setting transmission unit
- 204: Traffic table

## Claims

1. A control device for controlling a transmission rate of each piece of traffic between communication devices having an adaptive modulation function, comprising:
a throughput calculation means which receives information relating to a transmission rate change due to an adaptive modulation that occurs in a radio link between two communication devices included in the communication devices, and
calculates a predicted end-to-end throughput of each piece of traffic that uses the radio link, wherein the predicted end-to-end throughput is calculated by referring to on the basis of the information and a table which includes a degree of priority and a band index requested transmission rate and a lowest transmission rate of said each piece of traffic, and by allocating band to each piece of traffic that uses the radio link in order of the priority;
an adjustment means which calculates a missing band of each piece of traffic and/or an unused band of another radio link connecting between the communication devices, wherein the unused band indicates a transmission rate which is unused by the communication devices when a control of transmission rate with respect to said each piece of traffic is performed on a basis of the predicted end-to-end throughput, and performs the control of transmission rate with respect to said each piece of traffic, on a basis of the table and the missing band and/or the unused band; and
a setting transmission means which transmits the band distribution decided by the adjustment means information relating to the control of transmission rate to the communication devices.

2. The control device according to Claim 1, wherein the table stores parameters relating to a requested band and a lowest band of each piece of traffic, and
the adjustment means performs band adjustment the control of transmission rate with respect to said each piece of traffic by setting, as the unused band, a value obtained by subtracting the predicted end-to-end throughput of said each piece of traffic from a transmission rate of the another radio link between the communication devices, and by allocating the unused band to a piece of traffic that does not satisfy the requested transmission rate.

3. The control device according to Claim 1 or 2, wherein the table stores parameters relating to a requested band and a lowest band of each piece of traffic, and
the adjustment means performs band adjustment the control of transmission rate with respect to said each piece of traffic by transferring, a transmission rate of a piece of traffic that satisfies the lowest transmission rate, to a piece of traffic that does not satisfy the lowest transmission rate.

4. The control device according to Claim 3, wherein the adjustment means designates the pieces of traffic as a transfer source of a transmission rate in an ascending order of the degree of priority.

5. The control device according to any one of Claims 1 to 4, wherein the control device is also operated as the communication devices.

6. A communication system, comprising:
a plurality of communication devices having an adaptive modulation function; and
a control device for controlling a transmission rate of each piece of traffic between the plurality of communication devices, wherein
each of the plurality of communication devices executes the adaptive modulation function, and transmits a transmission rate change to the control device, and
the control device includes:
a throughput calculation means: receives information relating to a transmission rate change due to an adaptive modulation that occurs in a radio link between two communication devices included in the communication devices, and
calculates a predicted end-to-end throughput of each piece of traffic that uses the radio link, wherein the predicted end-to-end throughput is calculated by referring to a table which includes a degree of priority and a requested transmission rate and a lowest transmission rate of said each piece of traffic, and by allocating band to each piece of traffic that uses the radio link in order of the priority;
an adjustment means which calculates an unused band of another radio link connecting between the communication devices, wherein the unused band indicates a transmission rate which is unused by the communication devices when a control of transmission rate with respect to said each piece of traffic is performed on a basis of the predicted end-to-end throughput, and
performs the control of transmission rate with respect to said each piece of traffic, on a basis of the table and/or the unused band; and
a setting transmission means which transmits information relating to the control of transmission rate to the communication devices.

7. A communication control method for setting a transmission rate of each piece of traffic between communication devices having an adaptive modulation function, the method comprising:
receiving information relating to a transmission rate change, and calculating a predicted end-to-end throughput of each piece of traffic, on the basis of the information and a table which includes a degree of priority and a band index of each piece of traffic; and
calculating a missing band of each piece of traffic and/or an unused band of a radio link connecting between the communication devices, when band setting is performed on the basis of the predicted throughput, and deciding band distribution with respect to each piece of traffic, on the basis of the table and the missing band and/or the unused band; receiving information relating to a transmission rate change due to an adaptive modulation that occurs in a radio link between two communication devices included in the communication devices and calculating a predicted end to end throughput of each piece of traffic that uses the radio link, wherein the predicted end to end throughput is calculated as referring to a table which includes a degree of priority and a requested transmission rate and a lowest transmission rate of said each piece of traffic, and by allocating band to each piece of traffic that uses the radio link in order of priority; and,
calculating an unused band of another radio link connecting between the communication devices, wherein the unused band indicates a transmission rate which is unused by the communication devices when a control of transmission rate with respect to said each piece of traffic is performed on a basis of predicted end to end throughput, and performing the control of transmission rate with respect to said each piece of traffic on a basis of the table or the unused band; and
transmitting information relating to the control of transmitting to the communication devices.

8. A non-transitory computer readable medium storing a program which causes a computer to calculate a band of each piece of traffic between communication devices having an adaptive modulation function, the program causing the computer to execute the steps of claim 7.

## Patentansprüche

1. Steuervorrichtung zum Steuern einer Übertragungsrate jedes Verkehrsabschnitts zwischen Kommunikationsvorrichtungen mit einer adaptiven Modulationsfunktion, umfassend:
ein Durchsatzberechnungsmittel, das Informationen bezogen auf eine Übertragungsratenänderung aufgrund einer adaptiven Modulation empfängt, die in einer Funkverbindung zwischen zwei Kommunikationsvorrichtungen stattfindet, die in den Kommunikationsvorrichtungen enthalten ist, und
einen vorhergesagten Ende-zu-Ende-Durchsatz jedes Verkehrsabschnitts berechnet, der die Funkverbindung benutzt, wobei der vorhergesagte Ende-zu-Ende-Durchsatz durch Bezugnahme auf Basis der Informationen und einer Tabelle, die einen Prioritätsgrad und einen angeforderten Bandindex, eine Übertragungsrate und eine niedrigste Übertragungsrate, des genannten jeden Verkehrsabschnitts beinhaltet, und durch Zuteilen von Bandbreite zu jedem Verkehrsabschnitt, der die Funkverbindung in Prioritätsreihenfolge benutzt, berechnet wird;
ein Anpassungsmittel, das ein fehlendes Band jedes Verkehrsabschnitts und/oder ein unbenutztes Band einer weiteren Funkverbindung berechnet, die eine Verbindung zwischen den Kommunikationsvorrichtungen bildet, wobei das unbenutzte Band eine Übertragungsrate anzeigt, die von den Kommunikationsvorrichtungen nicht benutzt wird, wenn eine Steuerung der Übertragungsrate in Bezug auf den genannten jeden Verkehrsabschnitt auf Basis des vorhergesagten Ende-zu-Ende-Durchsatzes durchgeführt wird, und die Steuerung der Übertragungsrate in Bezug auf den genannten jeden Verkehrsabschnitt auf Basis der Tabelle und des fehlenden Bands und/oder des unbenutzten Bands durchführt; und
ein Einstellungsübertragungsmittel, das die Bandverteilung, die durch die Einstellmittelinformationen bezogen auf die Steuerung der Übertragungsrate entschieden worden ist, an die Kommunikationsvorrichtungen überträgt.

2. Steuervorrichtung nach Anspruch 1, wobei die Tabelle Parameter bezogen auf ein angefordertes Band und ein niedrigstes Band jedes Verkehrsabschnitts speichert und das Anpassungsmittel die Bandanpassung der Steuerung der Übertragungsrate in Bezug auf den genannten jeden Verkehrsabschnitt durch Einstellen eines Werts, der durch Subtrahieren des vorhergesagten End-zu-Ende-Durchsatzes des genannten jeden Verkehrsabschnitts von einer Übertragungsrate der weiteren Funkverbindung zwischen den Kommunikationsvorrichtungen erhalten wird, als das unbenutzte Band und durch Zuteilen des unbenutzten Bands einem Verkehrsabschnitt, der die angeforderte Übertragungsrate nicht deckt, durchführt.

3. Steuervorrichtung nach Anspruch 1 oder 2, wobei die Tabelle Parameter bezogen auf ein angefordertes Band und ein niedrigstes Band jedes Verkehrsabschnitts speichert und das Anpassungsmittel eine Bandanpassung der Steuerung der Übertragungsrate in Bezug auf den genannten jeden Verkehrsabschnitt durch Überführen einer Übertragungsrate eines Verkehrsabschnitts, der die niedrigste Übertragungsrate deckt, zu einem Verkehrsabschnitt, der die niedrigste Übertragungsrate nicht deckt, durchführt.

4. Steuervorrichtung nach Anspruch 3, wobei das Anpassungsmittel die Verkehrsabschnitte als eine Überführungsquelle einer Übertragungsrate in einer aufsteigenden Reihenfolge des Prioritätsgrads bezeichnet.

5. Steuervorrichtung nach einem der Ansprüche 1 bis 4, wobei die Steuervorrichtung auch als die Kommunikationsvorrichtungen betrieben wird.

6. Kommunikationssystem, das Folgendes aufweist:
mehrere Kommunikationsvorrichtungen mit einer adaptiven Modulationsfunktion und:
eine Steuervorrichtung zum Steuern einer Übertragungsrate jedes Verkehrsabschnitts zwischen den mehreren Kommunikationsvorrichtungen, wobei
jede der mehreren Kommunikationsvorrichtungen die adaptive Modulationsfunktion ausführt und eine Übertragungsratenänderung an die Steuervorrichtung überträgt, und
die Steuervorrichtung Folgendes beinhaltet:
ein Durchsatzberechnungsmittel, das Informationen bezogen auf eine Übertragungsratenänderung aufgrund einer adaptiven Modulation empfängt, die in einer Funkverbindung zwischen zwei Kommunikationsvorrichtungen stattfindet, die in den Kommunikationsvorrichtungen enthalten ist, und
einen vorhergesagten Ende-zu-Ende-Durchsatz jedes Verkehrsabschnitts berechnet, der die Funkverbindung benutzt, wobei der vorhergesagte Ende-zu-Ende-Durchsatz durch Bezugnahme auf eine Tabelle, die einen Prioritätsgrad und eine angeforderte Übertragungsrate und eine niedrigste Übertragungsrate des genannten jeden Verkehrsabschnitts beinhaltet, und durch Zuteilen von Bandbreite zu jedem Verkehrsabschnitt, der die Funkverbindung in Prioritätsreihenfolge benutzt, berechnet wird;
ein Anpassungsmittel, das ein unbenutztes Band einer weiteren Funkverbindung berechnet, die eine Verbindung zwischen den Kommunikationsvorrichtungen bildet, wobei das unbenutzte Band eine Übertragungsrate anzeigt, die von den Kommunikationsvorrichtungen nicht benutzt wird, wenn eine Steuerung der Übertragungsrate in Bezug auf den genannten jeden Verkehrsabschnitt auf Basis des vorhergesagten Ende-zu-Ende-Durchsatzes durchgeführt wird, und
die Steuerung der Übertragungsrate in Bezug auf den genannten jeden Verkehrsabschnitt auf Basis der Tabelle und/oder des unbenutzten Bands durchführt; und
ein Einstellungsübertragungsmittel, das Informationen bezogen auf die Steuerung der Übertragungsrate an die Kommunikationsvorrichtungen überträgt.

7. Kommunikationssteuerverfahren zum Einstellen einer Übertragungsrate jedes Verkehrsabschnitts zwischen Kommunikationsvorrichtungen mit einer adaptiven Modulationsfunktion, wobei das Verfahren Folgendes aufweist:
Empfangen von Informationen bezogen auf eine Übertragungsratenänderung und Berechnen eines vorhergesagten Ende-zu-Ende-Durchsatzes jedes Verkehrsabschnitts auf Basis der Informationen und einer Tabelle, die einen Prioritätsgrad und einen Bandindex jedes Verkehrsabschnitts beinhaltet; und
Berechnen eines fehlenden Bands jedes Verkehrsabschnitts und/oder eines unbenutzten Bands einer Funkverbindung, die eine Verbindung zwischen den Kommunikationsvorrichtungen bildet, wenn eine Bandeinstellung auf Basis des vorhergesagten Durchsatzes durchgeführt wird, und Entscheiden der Bandverteilung in Bezug auf jeden Verkehrsabschnitt auf Basis der Tabelle und des fehlenden Bands und/oder des unbenutzten Bands;
Empfangen von Informationen bezogen auf eine Übertragungsratenänderung aufgrund einer adaptiven Modulation, die in einer Funkverbindung zwischen zwei Kommunikationsvorrichtungen stattfindet, die in den Kommunikationsvorrichtungen beinhaltet ist, und Berechnen eines vorhergesagten Ende-zu-Ende-Durchsatzes jedes Verkehrsabschnitts, der die Funkverbindung benutzt, wobei der vorhergesagte Ende-zu-Ende-Durchsatz unter Bezugnahme auf eine Tabelle, die einen Prioritätsgrad und eine angeforderte Übertragungsrate und eine niedrigste Übertragungsrate des genannten jeden Verkehrsabschnitts beinhaltet, und durch Zuteilen von Band zu jedem Verkehrsabschnitt, der die Funkverbindung benutzt, in Prioritätsreihenfolge berechnet wird; und
Berechnen eines unbenutzten Bands einer weiteren Funkverbindung, die eine Verbindung zwischen den Kommunikationsvorrichtungen bildet, wobei das unbenutzte Band eine Übertragungsrate anzeigt, die von den Kommunikationsvorrichtungen nicht benutzt wird, wenn eine Steuerung der Übertragungsrate in Bezug auf den genannten jeden Verkehrsabschnitt auf Basis eines vorhergesagten Ende-zu-Ende-Durchsatzes durchgeführt wird, und Durchführen der Steuerung der Übertragungsrate in Bezug auf den genannten jeden Verkehrsabschnitt auf Basis der Tabelle oder des unbenutzten Bands; und
Übertragen von Informationen bezogen auf die Steuerung der Übertragung zu den Kommunikationsvorrichtungen.

8. Nichtflüchtiger computerlesbarer Datenträger, der ein Programm speichert, das einen Computer zum Berechnen eines Bands von jedem Verkehrsabschnitt zwischen Kommunikationsvorrichtungen mit einer adaptiven Modulationsfunktion veranlasst, wobei das Programm den Computer zum Ausführen der Schritte von Anspruch 7 veranlasst.

## Revendications

1. Dispositif de commande pour commander un débit de transmission de chaque parcelle de trafic entre des dispositifs de communication ayant une fonction de modulation adaptative, comprenant :
un moyen de calcul de capacité qui reçoit des informations se rapportant à un changement de débit de transmission dû à une modulation adaptative qui survient dans une liaison radioélectrique entre deux dispositifs de communication inclus dans les dispositifs de communication, et
calcule une capacité bout en bout prédite de chaque parcelle de trafic qui utilise la liaison radioélectrique, où la capacité bout en bout prédite est calculée par référence à sur la base des informations et d'une table qui comprend un degré de priorité et un débit de transmission d'indice de bande demandée et un débit de transmission le plus faible de chaque dite parcelle de trafic, et en attribuant une bande à chaque parcelle de trafic qui utilise la liaison radioélectrique en ordre de priorité ;
un moyen d'ajustement qui calcule une bande manquante de chaque parcelle de trafic et/ou une bande inutilisée d'une autre liaison radioélectrique établissant la connexion entre les dispositifs de communication, dans lequel la bande inutilisée indique un débit de transmission qui est inutilisé par les dispositifs de communication lorsqu'une commande de débit de transmission au sujet de chaque dite parcelle de trafic est effectuée sur une base de la capacité bout en bout prédite, et effectue la commande de débit de transmission au sujet de chaque dite parcelle de trafic, sur une base de la table et de la bande manquante et/ou de la bande inutilisée ; et
un moyen de réglage de transmission qui transmet aux dispositifs de communication la distribution de bande décidée par les informations du moyen d'ajustement se rapportant à la commande du débit de transmission.

2. Dispositif de commande selon la revendication 1, dans lequel la table stocke des paramètres se rapportant à une bande requise et à une bande la plus faible de chaque parcelle de trafic, et le moyen d'ajustement effectue un ajustement de bande la commande de débit de transmission au sujet de chaque dite parcelle de trafic en réglant, en tant que la bande inutilisée, une valeur obtenue en soustrayant la capacité bout en bout prédite de chaque dite parcelle de trafic d'un débit de transmission de l'autre liaison radioélectrique entre les dispositifs de communication, et en attribuant la bande inutilisée à une parcelle de trafic qui ne satisfait pas au débit de transmission requis.

3. Dispositif de commande selon la revendication 1 ou 2, dans lequel la table stocke des paramètres se rapportant à une bande requise et à une bande la plus faible de chaque parcelle de trafic, et le moyen d'ajustement effectue un ajustement de bande la commande de débit de transmission au sujet de chaque dite parcelle de trafic en transférant, un débit de transmission d'une parcelle de trafic qui satisfait au débit de transmission le plus faible, à une parcelle de trafic qui ne satisfait pas au débit de transmission le plus faible.

4. Dispositif de commande selon la revendication 3, dans lequel le moyen d'ajustement désigne les parcelles de trafic comme une source de transfert d'un débit de transmission dans un ordre ascendant du degré de priorité.

5. Dispositif de commande selon l'une quelconque des revendications 1 à 4, où le dispositif de commande fonctionne aussi en tant que les dispositifs de communication.

6. Système de communication, comprenant :
une pluralité de dispositifs de communication ayant une fonction de modulation adaptative ; et
un dispositif de commande pour commander un débit de transmission de chaque parcelle de trafic entre la pluralité de dispositifs de communication, dans lequel
chacun de la pluralité de dispositifs de communication exécute la fonction de modulation adaptative, et transmet un changement de débit de transmission au dispositif de commande, et
le dispositif de commande comprend :
un moyen de calcul de capacité : reçoit des informations se rapportant à un changement de débit de transmission dû à une modulation adaptative qui survient dans une liaison radioélectrique entre deux dispositifs de communication inclus dans les dispositifs de communication, et
calcule une capacité bout en bout prédite de chaque parcelle de trafic qui utilise la liaison radioélectrique, où la capacité bout en bout prédite est calculée en se référant à une table qui comprend un degré de priorité et un débit de transmission requis et un débit de transmission le plus faible de chaque dite parcelle de trafic, et en attribuant une bande à chaque parcelle de trafic qui utilise la liaison radioélectrique en ordre de priorité ;
un moyen d'ajustement qui calcule une bande inutilisée d'une autre liaison radioélectrique établissant la connexion entre les dispositifs de communication, dans lequel la bande inutilisée indique un débit de transmission qui est inutilisé par les dispositifs de communication lorsqu'une commande de débit de transmission au sujet de chaque dite parcelle de trafic est effectuée sur une base de la capacité bout en bout prédite, et
effectue la commande de débit de transmission au sujet de chaque dite parcelle de trafic, sur une base de la table et/ou de la bande inutilisée ; et
un moyen de réglage de transmission qui transmet aux dispositifs de communication des informations se rapportant à la commande du débit de transmission.

7. Procédé de commande de communication pour régler un débit de transmission de chaque parcelle de trafic entre des dispositifs de communication ayant une fonction de modulation adaptative, le procédé comprenant :
recevoir des informations se rapportant à un changement de débit de transmission, et calculer une capacité bout en bout prédite de chaque parcelle de trafic, sur la base des informations et d'une table qui comprend un degré de priorité et un indice de bande de chaque parcelle de trafic ; et
calculer une bande manquante de chaque parcelle de trafic et/ou une bande inutilisée d'une liaison radioélectrique entre les dispositifs de communication, lorsqu'un réglage de bande est effectué sur la base de la capacité prédite, et décider de la distribution de bande au sujet de chaque parcelle de trafic, sur la base de la table et de la bande manquante et/ou de la bande inutilisée ;
recevoir des informations se rapportant à un changement de débit de transmission dû à une modulation adaptative qui survient dans une liaison radioélectrique entre deux dispositifs de communication inclus dans les dispositifs de communication et calculer une capacité bout en bout prédite de chaque parcelle de trafic qui utilise la liaison radioélectrique, où la capacité bout en bout prédite est calculée en se référant à une table qui comprend un degré de priorité et un débit de transmission requis et un débit de transmission le plus faible de chaque dite parcelle de trafic, et en attribuant une bande à chaque parcelle de trafic qui utilise la liaison radioélectrique en ordre de priorité ; et
calculer une bande inutilisée d'une autre liaison radioélectrique établissant la connexion entre les dispositifs de communication, où la bande inutilisée indique un débit de transmission qui est inutilisé par les dispositifs de communication lorsqu'une commande de débit de transmission au sujet de chaque dite parcelle de trafic est effectuée sur une base de capacité bout en bout prédite, et en effectuant la commande du débit de transmission au sujet de chaque dite parcelle de trafic sur une base de la table ou de la bande inutilisée ; et
transmettre aux dispositifs de communication des informations se rapportant à la commande de transmission.

8. Support non transitoire lisible par ordinateur stockant un programme qui fait qu'un ordinateur calcule une bande de chaque parcelle de trafic entre des dispositifs de communication ayant une fonction de modulation adaptative, le programme faisant que l'ordinateur exécute les étapes selon la revendication 7.
